# EUROPEAN PATENT APPLICATION

(11) **EP 2 233 806 A1**
(43) Date of publication of application: **29.09.2010**
(21) Application number: 08862584.3
(22) Date of filing: 19.12.2008
(51) Int. Cl.: F16K 31/06

(54) **SOLENOID PILOT OPEN/CLOSE VALVE**

(30) Priority: 19.12.2007 JP 2007327339
(71) Applicant: Toyooki Kogyo Co., Ltd., Okazaki-shi Aichi 444-3512 (JP); JTEKT Corporation, Osaka-shi Osaka 542-8502 (JP)
(72) Inventor: WATANABE, Noritaka, Okazaki-shi Aichi 444-3512 (JP); SUZUKI, Hiroaki, Osaka-shi Osaka 542-8502 (JP)
(74) Representative: Roth, Klaus
(86) International application number: PCT/JP2008/073223
(87) International publication number: WO 2009/078484

(57) **Abstract**

An electromagnetic pilot opening/closing valve includes: a valve main body member that includes a sliding hole and a main valve seat; a main valve body that is slidably provided in the sliding hole of the valve main body member and is seatable on the main valve seat; a movable iron core that is slidable in a same direction as or parallel to a sliding direction of the main valve body; and a fixed iron core that includes a coil and attracts the movable iron core by energization of the coil. The main valve body includes a second sliding hole and a pilot valve seat, and a pilot valve body seatable on the pilot valve seat is provided in the second sliding hole so as to be slidable in the same direction as or parallel to the sliding direction of the main valve body. The movable iron core and the pilot valve body are designed to slidably engage with each other, and the movable iron core and the main valve body are designed to slidably engage with each other with a play therebetween. When the movable iron core is attracted by the fixed iron core by energization of the coil, the movable iron core causes the pilot valve body to slide inside the second sliding hole and sliding of the pilot valve body causes the main valve body to slide inside the sliding hole.

## Description

### TECHNICAL FIELD

The present invention relates to an electromagnetic pilot opening/closing valve, in which a movable iron core is attracted to a fixed iron core by energization of a coil, a pilot valve body is moved by the movable iron core, and subsequently a main valve body is moved, to thereby control fluid. The present invention particularly relates to an electromagnetic pilot opening/closing valve that is equipped in a fuel cell car to control supply of a high-pressure gas from a gas tank filled with a high-pressure hydrogen gas.

### BACKGROUND ART

In conventional techniques, such as described in Patent Document 1, a movable iron core attracted to a fixed iron core by energization is slidably inserted into a receiving hole, a pair of projections are provided to project at an end of the movable iron core so as to be radially separated from each other, and a support pin is radially inserted into each of the projections. Between the pair of projections of the movable iron core, a pilot valve body is slidably attached, the support pin is inserted into the pilot valve body with a play therebetween, and a top end of the pilot valve body is tapered. It is also configured such that a main valve body is slidably inserted into a receiving hole, the support pin is inserted with a larger play in an axial direction than the play with respect to the pilot valve body, the main valve body has a tapered surface on a side of a main valve seat, and a pilot valve seat is formed at an end surface opposite to the tapered surface of the main valve body, allowing the pilot valve body to be seated on the pilot valve seat.
Patent Document 1: Japanese Unexamined Patent Application Publication No. 2005-23975

### DISCLOSURE OF THE INVENTION

### PROBLEMS TO BE SOLVED BY THE INVENTION

The conventional techniques involve the following problem: Since the pilot valve body is supported slidably with respect to the movable iron core, three clearances between the movable iron core and the receiving hole, between the main valve body and the receiving hole, and between the pilot valve body and the pair of projections may cause occurrence of tilt between the pilot valve body and the pilot valve seat, and thus may cause a reduced sealing performance of the pilot valve body to the pilot seat.

An object of the present invention is to provide an electromagnetic pilot opening/closing valve, in which occurrence of tilt between the pilot valve body and the pilot seat is suppressed, and reduction in sealing performance of the pilot valve body to the pilot seat is suppressed.

### MEANS FOR SOLVING THE PROBLEMS

In order to achieve the above object, the present invention has taken the following measures to solve the problem. Specifically, an electromagnetic pilot opening/closing valve of the present invention includes: a valve main body member that includes a sliding hole and a main valve seat; a main valve body that is slidably provided in the sliding hole of the valve main body member and is seatable on the main valve seat; a movable iron core that is slidable in a same direction as or parallel to a sliding direction of the main valve body; and a fixed iron core that includes a coil and attracts the movable iron core by energization of the coil. The main valve body includes a second sliding hole and a pilot valve seat, and a pilot valve body seatable on the pilot valve seat is provided in the second sliding hole so as to be slidable in a same direction as or parallel to the sliding direction of the main valve body. The movable iron core and the pilot valve body are engaged with each other in the sliding direction thereof, and the movable iron core and the main valve body are engaged with each other with a play therebetween in the sliding direction thereof. According to the present invention, when the movable iron core is attracted by the fixed iron core by energization of the coil, the movable iron core causes the pilot valve body to slide inside the second sliding hole and the sliding of the pilot valve body causes the main valve body to slide inside the sliding hole.

The engagement of the movable iron core and the pilot valve body in the sliding direction thereof may be performed with a play therebetween. In this case, the play between the movable iron core and the pilot valve body is preferably smaller than the play between the movable iron core and the main valve body.

Alternatively, the engagement of the movable iron core and the pilot valve body in the sliding direction thereof may be performed without a play therebetween. Such a configuration may be possible, in which a projecting portion is formed to extend from the main valve body toward the movable iron core, the projecting portion including the second sliding hole and the movable iron core including a hole formed on an engaging side with the main valve body, and the projecting portion is disposed in the hole with a radial gap therebetween, the gap being larger than a clearance between the main valve body and the sliding hole, or a clearance between the pilot valve body and the second sliding hole.

At least the main valve body, the projecting portion and the pilot valve body are preferably made of an austenitic stainless steel which is a hydrogen embrittlement resistant material. A lubricant grease is preferably applied to a sliding surface of the pilot valve body.

The lubricant grease preferably contains, as main components, a base oil and fine particles made of a fluorine high-molecular resin polymer dispersed in the base oil.

### EFFECTS OF THE INVENTION

Since the pilot opening/closing valve of the present invention causes the pilot valve body to slide inside the second sliding hole provided in the main valve body, the clearance between the movable iron core and the receiving hole or the clearance between the main valve body and the sliding hole will not be a factor causing occurrence of tilt between the pilot valve body and the pilot valve seat. Accordingly, such an effect may be achieved that occurrence of tilt between the pilot valve body and the pilot valve seat is suppressed, and reduction in sealing performance of the pilot valve body to the pilot seat is suppressed.

Also, since the projecting portion of the main valve body with the second sliding hole formed therein is inserted into the hole of the movable iron core, while providing the radial gap between the projecting portion and the hole, projection of the projecting portion in the axial direction may be absorbed by the hole. Thus, an entire length in the axial direction can be reduced and downsizing may be achieved without causing defective sliding.

While a pilot valve body is only held by a pin and there is no sliding portion in Patent Document 1, the pilot valve body slidably engages with the projecting portion in the present invention, which serves to suppress tilt of the pilot valve body and improve sealing performance.

### BRIEF DESCRIPTION OF THE DRAWINGS

FIG. 1 is a sectional view showing a valve closed state of an electromagnetic pilot opening/closing valve, along an axial direction thereof, attached to a gas tank as one embodiment of the present invention.
FIG. 2 is a main part enlarged sectional view showing a valve opened state of the electromagnetic pilot opening/closing valve of the present embodiment.

### EXPLANATION OF REFERENCE NUMERALS

- 1: 1gas tank

- 8: attachment body

- 21: electromagnetic pilot opening/closing valve
- 22: valve main body
- 24: first valve main body member
- 26: second valve main body member
- 36: communication hole

- 44: connection hole
- 48: valve seat member
- 52: receiving hole
- 58: small diameter hole
- 64: movable iron core
- 66: second sliding hole
- 67a: insertion hole
- 69: gap
- 71: though hole
- 76: fixed iron core
- 82: coil spring
- 102: passage

- 46: main valve seat
- 50: sliding hole
- 54: main valve body
- 60: pilot valve seat
- 65: projecting portion
- 67: pilot valve body
- 68: bottomed hole
- 70: pin
- 73: coil
- 78: yoke
- 86: cap member
- 104: flow path

### BEST MODE FOR CARRYING OUT THE INVENTION

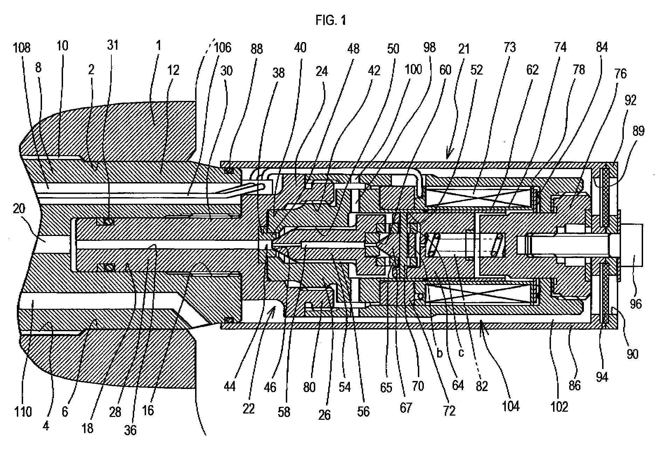

A most preferred embodiment for carrying out the invention will be described in detail hereinafter with reference to the drawings. As shown in FIG.1, the numeral 1 represents a gas tank, in which high pressure hydrogen gas is filled in the present embodiment. The gas tank 1 includes a mouth hole 2 formed in a through manner such that the mouth hole 2 communicates between an inside and an outside of the gas tank 1. The mouth hole 2 includes a female screw portion 4 and a straight hole portion 6 formed adjacent to the female screw portion 4.

An attachment body 8 is inserted into the mouth hole 2 from the outside of the gas tank 1 toward the inside thereof. The attachment body 8 includes a male screw portion 10 to be screwed into the female screw portion 4 and a straight shaft portion 12 to be plugged into the straight hole portion 6.

The attachment body 8 has a length such that a top end of the attachment body 8 reaches the inside of the gas tank 1, and the attachment body 8 includes a screw hole 16 and an insertion hole 18 formed adjacent to the screw hole 16 in an axial direction from an end portion thereof inside the gas tank 1. In addition, a through hole 20 is formed adjacent to the insertion hole 18, and an electromagnetic pilot opening/closing valve 21 is attached to a leading end side of the attachment body 8 inside of the gas tank 1.

The electromagnetic pilot opening/closing valve 21 includes a valve main body 22, and the valve main body 22 includes a first valve main body member 24 and a second valve main body member 26, which is made of a magnetic material. The first valve main body member 24 includes a projecting convex portion 28 having a cylindrical shape. When the convex portion 28 is plugged into the insertion hole 18 of the attachment body 8, a screw shaft portion 30 formed in the convex portion 28 is screwed into the screw hole 16, and thereby the electromagnetic pilot opening/closing valve 21 is fixed to the attachment body 8. An O-ring 31 is attached to the convex portion 28 for securing leak-tight property.

The convex portion 28 includes a communication hole 36 formed in an axial direction of the convex portion 28 and communicating with the through hole 20. The first valve main body member 24 includes, adjacent to the communication hole 36, a smaller diameter hole 38, a larger diameter hole 40 and a screw hole 42 formed in this order toward the inside of the gas tank 1. A valve seat member 48, including a connection hole 44 communicating with the communication hole 36 and a main valve seat 46, is inserted into the smaller diameter hole 38. The main valve seat 46 may be formed integrally with the first valve main body member 24.

While the second valve main body member 26 is inserted into the larger diameter hole 40, the second valve main body member 26 is screw-fixed into the screw hole 42. The second valve main body member 26 includes, in this order, a sliding hole 50 formed in an axial direction thereof and a receiving hole 52 formed adjacent to the sliding hole 50 toward the inside of the gas tank 1. In the present embodiment, the sliding hole 50 and receiving hole 52 are formed coaxially with each other.

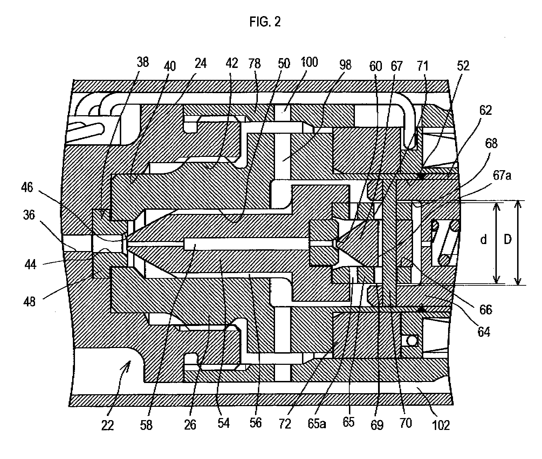

As shown in FIG. 2, a main valve body 54 is inserted into the sliding hole 50 slidably in the axial direction, and a plurality of grooves 56 are formed in an outer circumference of the main valve body 54 along the axial direction. The main valve body 54 is designed to be capable of sliding in the sliding hole 50 to be seated on or separated from a main valve seat 46. The main valve body 54 includes a small diameter hole 58 formed to penetrate a central portion of the main valve body 54, and the small diameter hole 58 is communicated with a later-described second sliding hole 66 through a pilot valve seat 60.

A guide tube 62 made of a non-magnetic material is connected to the second valve main body member 26. The guide tube 62 has a cylindrical shape and an inner diameter which is approximately the same as a diameter of the receiving hole 52 of the second valve main body member 26. One end opening side of the guide tube 62 is connected to the second valve main body member 26 by welding coaxially with the receiving hole 52, and the receiving hole 52 is extended into the guide tube 62. A movable iron core 64 is inserted into the receiving hole 52 slidably in an axial direction thereof.

An end surface of the main valve body 54 on a side of the movable iron core 64 includes a cylindrical projecting portion 65 formed to project in an axial direction toward the movable iron core 64, and the projecting portion 65 includes a second sliding hole 66 formed in an axial direction thereof. The second sliding hole 66 is formed such that when the main valve body 54 is inserted into the sliding hole 50, the sliding hole 50 and the second sliding hole 66 are parallel, and preferably coaxial with each other. Also, the projecting portion 65 may be formed integrally with the main valve body 54.

A pilot valve body 67 is inserted into the second sliding hole 66 slidably in an axial direction thereof. The pilot valve body 67 is designed to be capable of sliding in the second sliding hole 66 to be seated on or separated from the pilot valve seat 60. The projecting portion 65 includes a through hole 65a formed radially so as to communicate the receiving hole 52 and the second sliding hole 66. The pilot valve seat 60 may be provided to the main valve body 54, or alternatively, a member constituting the pilot valve seat 60 may be attached to an end portion of the main valve body 54.

An end surface of the movable iron core 64 on a side of the main valve body 54 includes a bottomed hole 68 in an axial direction, and the projecting portion 65 is inserted into the bottomed hole 68 with a gap 69 left in a radial direction. The gap 69 is a difference Δd between an outside diameter d of the projecting portion 65 and an inside diameter D of the bottomed hole 68. The gap 69 is formed so as to be larger than a clearance between the main valve body 54 and the sliding hole 50, or a clearance between the pilot valve body 67 and the second sliding hole 66. Further, in the present embodiment, the gap 69 is larger than a clearance between the movable iron core 64 and the receiving hole 52.

A pin 70 passing the bottomed hole 68 in a radial direction is inserted into the movable iron core 64, and the pin 70 is inserted through an insertion hole 67a formed to radially penetrate the pilot valve body 67, and engages the movable iron core 64 and the pilot valve body 67 with some play left in a sliding direction. Also, the pin 70 is inserted into a through hole 71 formed to radially penetrate the projecting portion 65, and engages the movable iron core 64 and the main valve body 54 with some play left in a sliding direction.

An inside diameter of the insertion hole 67a is a little larger than an outside diameter of the pin 70, and an inside diameter of the through hole 71 is larger than the outside diameter of the pin 70. It is designed such that the inside diameter of the insertion hole 67a is smaller than the inside diameter of the through hole 71, and a play (b) between the pin 70 and the insertion hole 67a is smaller than a play (c) between the pin 70 and the through hole 71. The play (b) may be zero.

An annular member 72 made of a magnetic material is attached around an outer circumference of the second valve main body member 26, and a coil 73 is attached around an outer circumference of the guide tube 62. The coil 73 is of a known type, in which an electrical wire is wound around a bobbin 74. The guide tube 62 is designed such that a fixed iron core 76 is inserted thereinto from the other end opening of the guide tube 62, and the movable iron core 64 and the fixed iron core 76 face each other.

A bottomed cylindrical yoke 78 is provided to cover an outside of the coil 73. The fixed iron core 76 penetrates a bottom wall of the yoke 78 and is inserted into the guide tube 62, and the fixed iron core 76 is screw-fixed and connected to the yoke 78. The yoke 78 is screw-fixed and connected to a male screw portion 80 of the first valve main body member 24.

A coil spring 82 is disposed between the movable iron core 64 and the fixed iron core 76. By a bias force of the coil spring 82 the movable iron core 64 is biased to move in a direction such that the main valve body 54 is seated on the main valve seat 46 and the pilot valve body 67 is seated on the pilot valve seat 60. A wave-shaped washer 84 is interposed between the bobbin 74 and the yoke 78.

An end of the attachment body 8 projecting toward the inside of the gas tank 1 is covered with a cap member 86. Leak-proof of its end is ensured by an O-ring 88 attached to the attachment body 8. An outside diameter of the attachment body 8 is made small such that an outside diameter of the cap member 86 is the same as or smaller than an outer diameter of the straight shaft portion 12 of the attachment body 8, and the cap member 86 is attached around an outer circumference of the attachment body 8.

A plurality of openings 89 are formed at an axial end of the cap member 86. A disc-shaped pressure member 92 having openings 90 formed coaxially with the openings 89 is disposed at the end of the cap member 86, and a flat filter member 94 is sandwiched between the end of the cap member 86 and the pressure member 92.

A bolt 96 penetrating the cap member 86, the pressure member 92 and the filter member 94 is screwed into the fixed iron core 76, and the cap member 86, the pressure member 92 and the filter member 94 are fixed to the fixed iron core 76. The filter member 94 is capable of catching foreign substances mixed in a high-pressure gas filled in the gas tank 1.

On the other hand, the second valve main body member 26 includes a plurality of connection holes 98 communicating with the receiving hole 52 and perpendicular to an axial direction thereof formed in a penetrating manner. The yoke 78 includes through holes 100 formed coaxially with the connection holes 98. A clearance is provided between an outer circumference of the yoke 78 and an inner circumference of the cap member 86 to constitute a passage 102. The passage 102 is communicated with the openings 89.

A flow path 104 communicating the outside and inside of the gas tank 1 is constituted by the through hole 20, the communication hole 36, the connection hole 44, the sliding hole 50, the receiving hole 52, the connection holes 98, the through holes 100, the passage 102, and the openings 89 and 90.

As shown in FIG. 1, lead wires 106 connected to the coil 73 are designed to pass between the outer circumference of the yoke 78 and the inner circumference of the cap member 86, pass through an insertion hole 108 formed in the attachment body 8, be pulled outside of the gas tank 1, and be capable of being connected to a not-shown external power source outside the gas tank 1. The insertion hole 108 is sealed in an area through which the lead wires 106 are pulled outside with a not-shown sealing member or the like.

A supply hole 110 is also formed in the attachment body 8. The supply hole 110, which is opened in a side face of the attachment body 8 inside the gas tank 1, is designed to be capable of filling a high-pressure gas into the gas tank 1.

An explanation will next be provided on operation of the electromagnetic pilot opening/closing valve in the above-described embodiment. Firstly, high-pressure hydrogen gas is filled into the gas tank 1 through the supply hole 110. When the coil 73 connected to the external power source through the lead wires 106 is energized as a result of driving a car, the fixed iron core 76 is excited and the movable iron core 64 is attracted to the fixed iron core 76. Then, a magnetic circuit passing through the fixed iron core 76, the yoke 78, the annular member 72, the second valve main body member 26 and the movable iron core 64 is formed.

Accordingly, as shown in FIG. 2, the movable iron core 64 slides inside the receiving hole 52, and first the pin 70 abuts an inner wall of the insertion hole 67a to thereby cause the pilot valve body 67 to slide inside the second sliding hole 66 so that the pilot valve body 67 is separated from the pilot valve seat 60. As a result, the high-pressure hydrogen gas flows into the connection hole 44 through the openings 90, the filter member 94, the openings 89, the passage 102, the through hole 100, the connection holes 98, the receiving hole 52, the through hole 65a, the second sliding hole 66 and the small diameter hole 58.

As a pressure in the connection hole 44 is increased, the movable iron core 64 is further moved, and the pin 70 abuts an inner wall of the through hole 71 and cause the main valve body 54 to slide, to thereby cause the main valve body 54 to be separated from the main valve seat 46. As a result, the sliding hole 50 and the connection hole 44 are communicated through the main valve seat 46, and the openings 90, the filter member 94, the openings 89, the passage 102, the through holes 100, the connection holes 98, the receiving hole 52, the groove 56, the sliding hole 50, the connection hole 44, the communication hole 36 and the through hole 20 are communicated, and thereby the high-pressure hydrogen gas flows outside of the gas tank 1.

In the present embodiment, the passage 102 is provided to prevent the hydrogen gas from flowing between the movable iron core 64 and the receiving hole 52. Accordingly, it is possible to prevent defective seating of the pilot valve body 67 caused by foreign matter, such as lubricant, being mixed in the hydrogen gas and entering between the pilot valve seat 60 and the pilot valve body 67 due to the flow of the hydrogen gas between the movable iron core 64 and the receiving hole 52.

On the other hand, attraction of the movable iron core 64 by the fixed iron core 76 is released by deenergization of the coil 73. The movable iron core 64 slides inside the receiving hole 52 by the bias force of the coil spring 82, and the pin 70 abuts the inner wall of the insertion hole 67a to thereby cause the pilot valve body 67 to slide toward the pilot valve seat 60. As a result of the sliding of the movable iron core 64, the pilot valve body 67 is seated on the pilot valve seat 60, and the pilot valve body 67 pushes the main valve body 54 so as to cause the main valve body 54 to slide inside the sliding hole 50 and be seated on the main valve seat 46. Accordingly, as shown in FIG. 1, the communication of the connection hole 44 with the sliding hole 50 and the small diameter hole 58 is blocked, and thereby outflow of the high-pressure hydrogen gas is stopped.

As described above, the movable iron core 64 slides inside the receiving hole 52 depending on energization or deenergization of the coil 73, the main valve body 54 slides inside the sliding hole 50 provided in the valve main body 22 to be seated on or separated from the main valve seat 46, and the pilot valve body 67 slides inside the second sliding hole 66 provided in the main valve body 54 to be seated on or separated from the pilot valve seat 60.

It is a clearance between the pilot valve body 67 and the second sliding hole 66 provided in the main valve body 54 that may be a factor causing occurrence of tilt between the pilot valve body 67 and the pilot valve seat 60. Two clearances between the movable iron core 64 and the receiving hole 52 and between the main valve body 54 and the sliding hole 50 will not be a factor causing occurrence of tilt between the pilot valve body 67 and the pilot valve seat 60. Accordingly, it is possible to suppress occurrence of tilt between the pilot valve body 67 and the pilot valve seat 60, and thus improve seating performance between the pilot valve body 67 and the pilot valve seat 60.

Also, since the projecting portion 65 of the main valve body 54 with the second sliding hole 66 formed therein is inserted into the bottomed hole 68 of the movable iron core 64, projection of the projecting portion 65 in the axial direction may be absorbed by the bottomed hole 68. Thus, an entire length in the axial direction can be reduced and downsizing may be achieved. It is an outer circumference of the movable iron core 64 on the side of the main valve body 54 that affects an attraction force for attracting the movable iron core 64 to the fixed iron core 76. Formation of the bottomed hole 68 in the movable iron core 64 will not cause reduction of the attraction force.

Further, since the gap 69 in the radial direction is formed between the projecting portion 65 and the bottomed hole 68, it is possible, when the movable iron core 64 slides inside the receiving hole 52, to prevent occurrence of defective sliding resulting from contact of an inner wall of the bottomed hole 68 with the projecting portion 65 due to machining errors of the sliding hole 50, the receiving hole 52, the main valve body 54, etc. In this case, the gap 69 should be larger than the clearance between the main valve body 54 and the sliding hole 50, and than the clearance between the pilot valve body 67 and the second sliding hole 66. Also, the gap 69 should be larger than the clearance between the movable iron core 64 and the receiving hole 52. The size of the gap 69 may be determined based on machining errors, experiments and other factors.

The sliding hole 50 and the receiving hole 52, which have different diameters in the present embodiment, may have the same diameters. Also, the main valve body 54 and the main valve seat 46, and the pilot valve body 67 and the pilot valve seat 60, which include tapered surfaces, may have no tapered surfaces. Further, although the bottomed hole 68 is formed in the movable iron core 64 and the projecting portion 65 is inserted into the bottomed hole 68, the bottomed hole 68 having a bottom is not always required. It may be possible to form a through hole in an axial direction of the movable iron core 64 and insert the projecting portion 65 as well as the coil spring 82 into the through hole such that a bias force can be transmitted therebetween by a retaining ring or the like.

In the electromagnetic pilot opening/closing valve 21 of the present embodiment, at least the main valve body 54, the projecting portion 65 and the pilot valve body 67 are made of an austenitic stainless steel, such as JIS-SUS316L, which is a material having resistance to hydrogen embrittlement. While the second valve main body member 26 is made of a magnetic material to constitute a magnetic circuit in the present embodiment, the above-mentioned austenitic stainless steel is used in a case of constituting no magnetic circuit. There is a tendency that a hydrogen embrittlement resistant material, such as SUS316L, has a high toughness, and mutual sliding of the same materials easily results in adhesion. Since a large axial force resulting from a high pressure is exerted on the main valve body, a combination of adhesive materials can be used for the main valve body. In a case of the pilot valve body, which is moved by an attraction force of an electromagnet, use of an adhesive material for forming a sliding surface leads to a problem that proper opening/closing operation cannot be guaranteed. However, by improving processing accuracy and surface roughness of the sliding surface and employing an appropriate lubricant, it is possible to suppress adhesion and achieve sufficiently stable opening/closing operation of the pilot valve body by the attraction force of the electromagnet.

A suitable lubricant may contain, as main components, a base oil and fine particles made of a fluorine high-molecular resin polymer dispersed in the base oil. Chemically stable perfluoropolyether, for example, may be used as the base oil.

Examples of the fluorine high-molecular resin polymer include polytetrafluoroethylene (PTFE), tetrafluoroethylene-perfluoro alkyl vinyl ether copolymer (PFA), tetrafluoroethylene-hexafluoropropylene copolymer (FEP), tetrafluoroethylene-ethylene copolymer (ETFE), polychlorotrifluoroethylene copolymer (PCTFE), chlorotrifluoroethylene-ethylene copolymer (ECTFE), polyvinylidene fluoride (PVDF), and polyvinyli fluoride (PVF). One, or two or more polymers selected from among these may be used as the fluorine high-molecular resin polymer.

The present invention should not at all be limited to the above-described embodiments, but may be practiced in various forms without departing from the scope of the invention.

## Claims

1. An electromagnetic pilot opening/closing valve, comprising:
a valve main body member that includes a sliding hole and a main valve seat;
a main valve body that is slidably provided in the sliding hole of the valve main body member and is seatable on the main valve seat;
a movable iron core that is slidable in a same direction as or parallel to a sliding direction of the main valve body; and
a fixed iron core that includes a coil and attracts the movable iron core by energization of the coil,
wherein the main valve body includes a second sliding hole and a pilot valve seat, and a pilot valve body seatable on the pilot valve seat is provided in the second sliding hole so as to be slidable in the same direction as or parallel to the sliding direction of the main valve body,
wherein the movable iron core and the pilot valve body are designed to engage with each other in the sliding direction thereof, and the movable iron core and the main valve body are designed to engage with each other with a play therebetween in the sliding direction thereof, and
wherein when the movable iron core is attracted by the fixed iron core by energization of the coil, the movable iron core causes the pilot valve body to slide inside the second sliding hole and sliding of the pilot valve body causes the main valve body to slide inside the sliding hole.

2. The electromagnetic pilot opening/closing valve according to claim 1, wherein engagement of the movable iron core and the pilot valve body in the sliding direction thereof is designed to be performed with a play therebetween, the play between the movable iron core and the pilot valve body being smaller than the play between the movable iron core and the main valve body.

3. The electromagnetic pilot opening/closing valve according to claim 1, wherein engagement of the movable iron core and the pilot valve body in the sliding direction thereof is designed to be performed without a play therebetween.

4. The electromagnetic pilot opening/closing valve according to any one of claims 1 to 3, further comprising:
a projecting portion extending from the main valve body toward the movable iron core, the projecting portion including the second sliding hole and the movable iron core including a hole formed on an engaging side with the main valve body,
wherein the projecting portion is disposed in the hole with a radial gap therebetween, the gap being larger than a clearance between the main valve body and the sliding hole, or a clearance between the pilot valve body and the second sliding hole.

5. The electromagnetic pilot opening/closing valve according to claim 4, wherein at least the main valve body, the projecting portion and the pilot valve body are made of an austenitic stainless steel which is a hydrogen embrittlement resistant material.

6. The electromagnetic pilot opening/closing valve according to any one of claims 1 to 5, wherein a lubricant grease is applied to a sliding surface of the pilot valve body, the lubricant grease containing, as main components, a base oil and fine particles made of a fluorine high-molecular resin polymer dispersed in the base oil.
